# EUROPEAN PATENT APPLICATION

(11) **EP 4 811 067 A1**
(43) Date of publication of application: **23.09.2026**
(21) Application number: 24890706.5
(22) Date of filing: 13.11.2024
(51) Int. Cl.: G05D 1/43

(54) **ROBOTIC LAWN MOWER ESCAPE METHOD AND APPARATUS, DEVICE, AND STORAGE MEDIUM**

(30) Priority: 14.11.2023 CN 202311516065
(71) Applicant: Yosemite Shanghai Robotics Co., Ltd, Shanghai 200233 (CN)
(72) Inventor: SU, Hans, Shanghai 200233 (CN); LI, Jack, Shanghai 200233 (CN); GU, Jeff, Shanghai 200233 (CN); ZHAO, Xun, Shanghai 200233 (CN); FAN, Wolory, Shanghai 200233 (CN); REN, Sunny, Shanghai 200233 (CN)
(74) Representative: JWP Patent & Trademark Attorneys
(86) International application number: PCT/CN2024/131724
(87) International publication number: WO 2025/103351

(57) **Abstract**

A method includes: identifying an obstacle within a predetermined range of the lawnmower robot in a case where it is detected that positioning information of the lawnmower robot is lost; determining a first vector according to a first projection point of a first reference point of the obstacle on a ground and a second projection point of a second reference point of the lawnmower robot on the ground; wherein a starting point of the first vector is the first projection point, and an ending point of the first vector is the second projection point; and controlling, based on a posture of the lawnmower robot and the first vector, the lawnmower robot to move such that the lawnmower robot is extricated. In a case where the positioning information of the lawnmower robot is lost, the lawnmower robot can obtain a positioning signal and is extricated.

## Description

### TECHNICAL FIELD

The present application relates to the technical field of control of lawnmower robots, and in particular, relates to a method and apparatus for extrication of a lawnmower robot, and a device and storage medium therefor.

### BACKGROUND

With the increase of green areas in cities, the area of laid lawns is also increasing day by day. However, maintenance of lawns is not an easy task. Especially in seasons with suitable sunlight and temperature, grass grows rapidly, thus requiring significant labor and time costs on the maintenance of lawns. To reduce the cost of lawn maintenance, lawnmower robots have emerged.

A lawnmower robot is an intelligent device dedicated to mowing lawns. During lawn mowing, the lawnmower robot does not require manual control, and may mow grass according to a pre-planned travel path to complete lawn mowing tasks. However, during a mowing operation, the lawnmower robot often experiences a phenomenon of being trapped in place and unable to travel. Therefore, how to enable the lawnmower robot to be extricated is an urgent problem to be solved currently.

### SUMMARY

The present application provides a method and apparatus for extrication of a lawnmower robot, and a device and storage medium therefor, so as to solve the problem that the lawnmower robot is trapped in place and unable to travel during an operation.

In a first aspect, the present application provides a method for extrication of a lawnmower robot. The method includes: identifying an obstacle within a predetermined range of the lawnmower robot in a case where it is detected that positioning information of the lawnmower robot is lost; determining a first vector according to a first projection point of a first reference point of the obstacle on a ground and a second projection point of a second reference point of the lawnmower robot on the ground; wherein a starting point of the first vector is the first projection point, and an ending point of the first vector is the second projection point; and controlling, based on a posture of the lawnmower robot and the first vector, the lawnmower robot to move such that the lawnmower robot is extricated.

In a second aspect, the present application further provides an apparatus for extrication of a lawnmower robot. The apparatus includes: an identifying module, configured to identify an obstacle within a predetermined range of the lawnmower robot in a case where it is detected that positioning information of the lawnmower robot is lost; a determining module, configured to determine a first vector according to a first projection point of a first reference point of the obstacle on a ground and a second projection point of a second reference point of the lawnmower robot on the ground; wherein a starting point of the first vector is the first projection point, an ending point of the first vector is the second projection point, and a length of the first vector is a distance between the first projection point and the second projection point; and a control module, configured to control, based on a posture of the lawnmower robot and the first vector, the lawnmower robot to move such that the lawnmower robot is extricated.

In a third aspect, the present application further provides an electronic device. The electronic device includes: a memory and a processor, the memory storing one or more computer programs runnable on the processor, wherein the processor, when loading and running the one or more computer programs, is caused to perform the method according to the present application.

In a fourth aspect, the present application further provides a computer-readable storage medium. The computer-readable storage medium stores one or more computer programs thereon, wherein the one or more computer programs, when loaded and run on a processor, cause the processor to perform the method according to the present application.

In embodiments of the present application, an analysis reveals that positioning information of the lawnmower robot is lost due to presence of an obstacle nearby. In a case where the positioning information of the lawnmower robot is lost, instead of moving randomly, the lawnmower robot is controlled, based on a first vector between the obstacle and the lawnmower robot, to move. A starting point of the first vector is the obstacle, and an ending point of the first vector is the lawnmower robot, that is, a direction of the first vector points from the obstacle to the lawnmower robot. In this way, the lawnmower robot is enabled to continuously move along a direction away from the obstacle. This helps the lawnmower robot to obtain a positioning signal, such that the lawnmower robot is extricated.

### BRIEF DESCRIPTION OF DRAWINGS

FIG. 1 is an implementation flowchart of a method for extrication of a lawnmower robot according to an embodiment of the present application;
FIG. 2 is an implementation flowchart of another method for extrication of a lawnmower robot according to an embodiment of the present application;
FIG. 3 is an implementation flowchart of yet another method for extrication of a lawnmower robot according to an embodiment of the present application;
FIG. 4 is a schematic diagram of an obstacle and a lawnmower robot from a top view according to an embodiment of the present application;
FIG. 5 is a schematic diagram of an obstacle and a lawnmower robot from a top view according to an embodiment of the present application;
FIG. 6 is a schematic diagram of an obstacle and a lawnmower robot from a top view according to an embodiment of the present application;
FIG. 7 is an implementation flowchart of a method for extrication of a lawnmower robot according to an embodiment of the present application;
FIG. 8 is a schematic diagram of an obstacle and a lawnmower robot from a top view according to an embodiment of the present application;
FIG. 9 is a schematic diagram of an obstacle and a lawnmower robot from a top view according to an embodiment of the present application;
FIG. 10 is a structural schematic diagram of an apparatus for extrication of a lawnmower robot according to an embodiment of the present application; and
FIG. 11 is a structural schematic diagram of an electronic device according to an embodiment of the present application.

### DETAILED DESCRIPTION

In the present application, the term "at least one" refers to one or more than one, and the term "a plurality of" refers to two or more than two. The term "and/or" is merely an association relationship for describing associated objects, which represents that there may exist three types of relationships. For example, the phrase "A and/or B" means (A), (B), or (A and B), wherein A and B may be single or plural. In addition, the symbol "/" generally represents an "or" relationship between associated objects before and after the symbol. The expression "at least one of the following" or the like expression means any combination of the items or options listed, including a single item or option or any combination of plural items or options listed. For example, at least one of a single a, a single b, and a single c may indicate: the single a, the single b, the single c, a combination of a and b, a combination of a and c, a combination of b and c, or a combination of a, b, and c, wherein each of a, b, and c may be single or plural. In addition, the terms "first," "second," and the like are merely for the illustration purpose, and shall not be construed as indicating or implying a relative importance.

In the description of the present application, it should be understood that the terms "central," "transversal," "longitudinal," "upper," "lower," "left," "right," "front," "rear," and the like indicate orientations and position relationships which are based on the illustrations in the accompanying drawings, and these terms are merely for ease and brevity of the description, instead of indicating or implying that the devices or elements shall have a particular orientation and shall be structured and operated based on the particular orientation. Accordingly, these terms shall not be construed as limiting the present application.

In the description of the present application, unless otherwise explicitly specified and defined, the terms "connected," "coupled," and derivatives forms thereof shall be understood in a broad sense. For example, the terms "connected," "coupled," and derivatives form thereof for depicting the circuit structure, in addition to physical connection, may also be understood as electrical connections or signal connection. The connection, for example, may be direct connection, i.e., the physical connection or, indirect connection via at least one intermediate element as long as the circuit is turned on, or communication between the interiors of two elements. The signal connection, in addition to signal connection via a circuitry, may also be signal connection via a communication medium, for example, radio waves. Persons of ordinary skill in the art may understand specific meanings of the above terms in the present application according to the actual circumstances and contexts.

With the increase of green areas in cities, the area of laid lawns is also increasing day by day. However, maintenance of lawns is not an easy task. Especially in seasons with suitable sunlight and temperature, grass grows rapidly, thus requiring significant labor and time costs on the maintenance of lawns. To reduce the cost of lawn maintenance, lawnmower robots have emerged.

A lawnmower robot is an intelligent device dedicated to mowing lawns. During lawn mowing, the lawnmower robot does not require manual control, and may mow grass according to a pre-planned travel path to complete lawn mowing tasks. However, during a mowing operation, the lawnmower robot often experiences a phenomenon of being trapped in place and unable to travel. Therefore, how to enable the lawnmower robot to be extricated is an urgent problem to be solved currently.

It may be understood that prior to performing an operation, the lawnmower robot needs to pre-plan a mowing path. When performing the operation according to the planned mowing path, the lawnmower robot needs continuous positioning to ensure that it does not deviate from the mowing path. However, it is found in actual operation that if the lawnmower robot loses its positioning information, the lawnmower robot may fail to continue to travel and operate according to the mowing path, and the lawnmower robot is trapped in place.

Through analysis, it is found that when the positioning of the lawnmower robot is lost, a location where the lawnmower robot is situated happens to be near an obstacle, or when the lawnmower robot travels near an obstacle, its positioning information is often lost. Based on this, the present application provides a method for extrication of a lawnmower robot. In a case where the positioning information of the lawnmower robot is lost, an obstacle near the lawnmower robot is detected. Upon detecting the obstacle, the lawnmower robot is controlled to move to be away from the obstacle according to position information of the obstacle, until a positioning signal is obtained. Thereafter, the lawnmower robot may continue to operate according to the pre-planned mowing path.

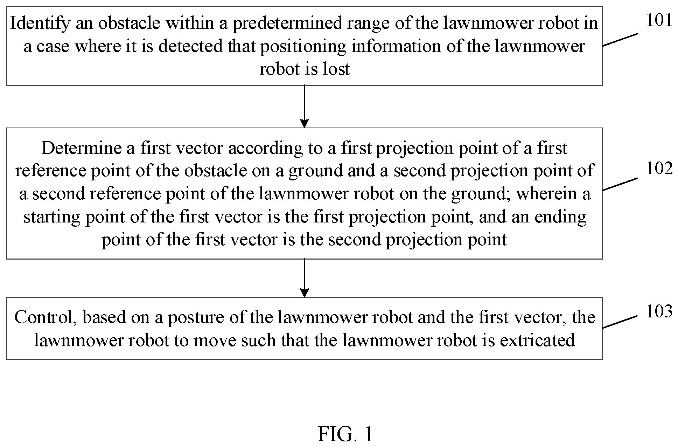

The method for extrication of the lawnmower robot according to the present application is as shown in FIG. 1. The method is applied to a lawnmower robot, and the method includes the following step 101 to step 103.

In step 101, an obstacle is identified within a predetermined range of the lawnmower robot in a case where it is detected that positioning information of the lawnmower robot is lost.

Before performing a mowing operation, the lawnmower robot pre-constructs a lawn map and plans a mowing path based on the lawn map. During the operation, the lawnmower robot needs to continuously acquire positioning information and travel according to the mowing path based on the positioning information.

The lawnmower robot includes a positioning information acquiring module. In some embodiments, the positioning information acquiring module may include a sensor (for example, RTK sensor) using real-time kinematic (RTK) positioning. The RTK sensor is configured to receive positioning signals (for example, GPS signals) from a plurality of satellites of a global positioning system (GPS) and a base station, and calculate position information of the lawnmower robot based on the received GPS signals and the RTK technology. The position information of the lawnmower robot is coordinate information in a pre-constructed map coordinate system.

It may be understood that the RTK technology is a technology for real-time dynamic relative positioning using GPS carrier phase observations. The RTK technology implements positioning on the lawnmower robot based on the base station and the satellites, and is a measurement method capable of obtaining centimeter-level positioning accuracy in real time. During positioning of the lawnmower robot using the RTK technology, the base station transmits carrier observations and station coordinate information thereof together to the lawnmower robot in real time over a data link. The lawnmower robot receives a carrier phase from a GPS satellite and a carrier phase from the base station, determines a carrier phase difference between the carrier phase of the GPS satellite and the carrier phase of the base station in real time, and determines a centimeter-level positioning result in real time based on the carrier phase difference determined in real time.

In some other embodiments, the positioning information acquiring module may include an image sensor. The image sensor continuously captures images and performs matching on feature points between adjacent images, so as to obtain the positioning information of the lawnmower robot. Positioning is performed based on a matching situation of the feature points between the adjacent images.

In step 101, the determination that the positioning information of the lawnmower robot is lost may be made based on at least one of the following situation (1) and situation (2).

In situation (1), the RTK sensor does not receive the positioning signal from at least one of the GPS satellite and the base station within a predetermined time.

It may be understood that in a case where the positioning signal of at least one of the GPS and the base station is not received within the predetermined time, the lawnmower robot may not position itself based on the positioning signal, such that the positioning information thereof is lost.

In situation (2), brightness and darkness changes between the adjacent images collected by the image sensor are obvious, and the feature points do not match.

Exemplarily, in a case where a difference in grayscale values between the adjacent images collected by the image sensor is greater than a predetermined threshold, or a matching degree of the feature points is greater than a predetermined threshold, situation (2) is satisfied.

In some embodiments, the predetermined range may be a circular area with the lawnmower robot as a center and a predetermined distance as a radius. The lawnmower robot is equipped with a radar sensor. In a case where the positioning information of the lawnmower robot is lost, the radar sensor emits a radar signal to detect whether an obstacle is present within the predetermined range.

In step 102, a first vector is determined according to a first projection point of a first reference point of the obstacle on a ground and a second projection point of a second reference point of the lawnmower robot on the ground; wherein a starting point of the first vector is the first projection point, and an ending point of the first vector is the second projection point.

The starting point of the first vector is the first projection point of the obstacle, and the ending point of the first vector is the second projection point of the lawnmower robot. That is, a direction of the first vector points from the obstacle to the lawnmower robot, and the direction of the first vector is a direction always away from the obstacle.

An analysis on causes to the positioning loss reveals that when the lawnmower robot travels near the obstacle, the positioning information thereof is often lost. The type of the obstacle includes a first type and a second type. An obstacle of the first type may be a building with a regular shape, for example, a high-rise building or a wall. An obstacle of the second type may be an object with an irregular shape, for example, a tree or the like.

When the lawnmower robot travels near the obstacle, the positioning information thereof is often lost. This is because high buildings around the lawnmower robot may block transmission of the positioning signal, such that the lawnmower robot fails to receive the positioning signal. Similarly, in a case where there is a big tree around the lawnmower robot, for example, a leafy arbor, the arbor has a huge crown, the lawnmower robot is located below the crown, and leaves in the crown may also block the transmission of the positioning signal, such that the lawnmower robot cannot receive the positioning signal.

It may be understood that for the obstacle, whether it is a building or a tree crown, it is a three-dimensional object, and the lawnmower robot is also a three-dimensional object. Reference points on the obstacle and the lawnmower robot may not be on the ground. Therefore, in determination of the reference points upon which the first vector between the obstacle and the lawnmower robot is based, it is necessary to project the reference points to the ground, and determine the first vector based on a projection point of the reference point of the obstacle on the ground and a projection point of the lawnmower robot on the ground.

In some embodiments, the type of the obstacle is the first type, and the first reference point on the obstacle may be a center position of the obstacle. Exemplarily, the obstacle is a wall, and the first reference point on the wall may be a center position of the wall; or the obstacle is a building, and the first reference point on the building may be a center position of the building, or a center position of a wall in the building close to the lawnmower robot.

In some embodiments, the type of the obstacle is the second type, and the first reference point on the obstacle may be any point of a designated part of the obstacle. Exemplarily, the obstacle is a leafy arbor, and the designated part of the obstacle is a crown of the arbor. The crown includes side branches and leaves, that is, a part above a main trunk of the arbor. Then, the first reference point of the crown may be a center of the crown, or any point on the crown.

Upon determination of the first reference point, the first reference point is projected vertically to the ground, and the first projection point is obtained.

In some embodiments, the second reference point of the lawnmower robot may be a center of the lawnmower robot.

In some embodiments, the lawnmower robot is equipped with a camera configured to detect a surrounding environment or for positioning. The number of cameras may be one, or may be two. Further, the second reference point of the lawnmower robot may be a center position of a single camera, or may be a midpoint of a connection line between two cameras.

Upon determination of the second reference point, the second reference point is projected vertically to the ground, and the second projection point is obtained.

During actual operation processes, the embodiments of the present application do not limit a determining manner of the first reference point and the second reference point, which may be adaptively selected according to actual usage situations.

In step 103, the lawnmower robot is controlled, based on a posture of the lawnmower robot and the first vector, to move such that the lawnmower robot is extricated.

In this step, based on the posture of the lawnmower robot and the first vector, the lawnmower robot is controlled to move, that is, the lawnmower robot moves along the first vector.

It may be understood that a current travel orientation of the lawnmower robot may be the same as or different from the direction of the first vector determined in step 102. Therefore, when the lawnmower robot moves along the first vector, it is necessary to first rotate the lawnmower robot such that the travel orientation of the lawnmower robot is the same as the direction of the first vector in step 102, and then move along the direction of the first vector, such that the lawnmower robot obtains a positioning signal, and the lawnmower robot is extricated.

In this embodiment, an analysis reveals that positioning information of the lawnmower robot is lost due to presence of an obstacle nearby. In a case where the positioning information of the lawnmower robot is lost, instead of moving randomly, the lawnmower robot is controlled, based on a first vector between the obstacle and the lawnmower robot, to move. A starting point of the first vector is the obstacle, and an ending point of the first vector is the lawnmower robot, that is, the direction of the first vector points from the obstacle to the lawnmower robot. In this way, the lawnmower robot is enabled to continuously move along a direction away from the obstacle. This helps the lawnmower robot to obtain a positioning signal, such that the lawnmower robot is extricated.

The present application further provides a method for extrication of a lawnmower robot, which is applied to the lawnmower robot. The method specifically explains how the lawnmower robot is extricated based on its own posture and a first vector.

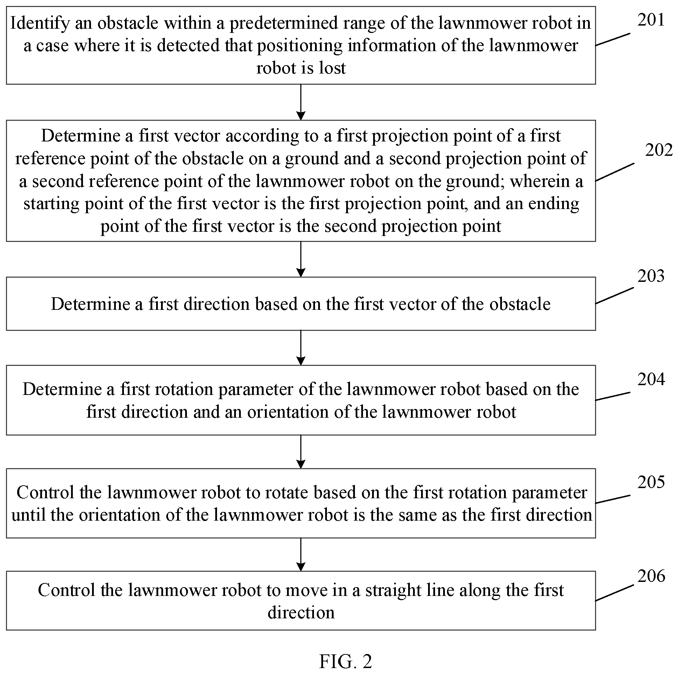

An implementation flowchart of the method for extrication of a lawnmower robot according to this embodiment is as illustrated in FIG. 2. The method includes the following step 201 to step 206.

In step 201, an obstacle within a predetermined range of the lawnmower robot is identified in a case where it is detected that positioning information of the lawnmower robot is lost.

In some embodiments, the predetermined range may be a circular area with the lawnmower robot as a center and a predetermined distance as a radius. The lawnmower robot is equipped with a radar sensor, for example, a laser radar. In a case where the positioning information of the lawnmower robot is lost, the radar sensor emits a radar signal to detect whether an obstacle exists within the predetermined range.

In step 202, a first vector is determined according to a first projection point of a first reference point of the obstacle on a ground and a second projection point of a second reference point of the lawnmower robot on the ground; wherein a starting point of the first vector is the first projection point, an ending point of the first vector is the second projection point, and a length of the first vector is a distance between the first projection point and the second projection point.

The starting point of the first vector is the first projection point of the obstacle, and the ending point of the first vector is the second projection point of the lawnmower robot. That is, a direction of the first vector points from the obstacle to the lawnmower robot, and the direction of the first vector is a direction always away from the obstacle.

In step 203, a first direction is determined based on the first vector of the obstacle.

In the present application, a plurality of obstacles may be present, or a single obstacle may be present. In a case where one obstacle is present, the direction of the first vector corresponding to the obstacle is the first direction. In a case where a plurality of obstacles are present, specific operations of determining the first direction are as described in step 303 to step 304 in an embodiment hereinafter or as described in step 703 to step 704 in an embodiment hereinafter, which are not described herein any further.

In step 204, a first rotation parameter of the lawnmower robot is determined based on the first direction and an orientation of the lawnmower robot.

The orientation of the lawnmower robot may be an orientation of a main camera, configured to detect a surrounding environment, installed on the lawnmower robot, which may also be referred to as a travel orientation of the lawnmower robot. The travel orientation of the lawnmower robot is a direction in which the lawnmower robot travels.

It may be understood that the first direction is a direction in which the lawnmower robot moves. Before the lawnmower robot moves along the first direction, a current travel direction of the lawnmower robot may be the same as or different from the first direction. In a case where the current travel direction of the lawnmower robot is different from the first direction, the lawnmower robot needs to perform a rotation operation to rotate until the travel orientation thereof is the same as the first direction, and then travel along the first direction.

Therefore, before the lawnmower robot moves along the first direction, the first rotation parameter of the lawnmower robot is first determined based on the first direction and the orientation of the lawnmower robot.

Further, in some embodiments, a camera is installed inside the lawnmower robot, and the lawnmower robot determines the current orientation by photographing a feature object on the ground; and in some other embodiments, a wind direction sensor is installed on the lawnmower robot, which may sense a direction and an intensity of wind to determine the orientation of the lawnmower robot.

The first rotation parameter includes a rotation direction and a rotation angle. The rotation direction includes clockwise rotation and counterclockwise rotation.

Upon determination of the orientation of the lawnmower robot, a first angle for the lawnmower robot to rotate clockwise from the current orientation to the first direction and a second angle for the lawnmower robot to rotate counterclockwise from the current orientation to the first direction are determined. In a case where the first angle is greater than the second angle, the rotation direction of the first rotation parameter is the counterclockwise rotation, and the rotation angle is the second angle; or in a case where the first angle is less than the second angle, the rotation direction of the first rotation parameter is the clockwise rotation, and the rotation angle is the first angle.

In step 205, the lawnmower robot is controlled, based on the first rotation parameter, to rotate until the orientation of the lawnmower robot is the same as the first direction.

Exemplarily, in a case where the rotation direction of the lawnmower robot is the counterclockwise rotation and the rotation angle is the second angle, the lawnmower robot rotates along a counterclockwise direction. Upon rotation by the second angle, the lawnmower robot may be rotated such that the orientation thereof is the same as the first direction.

In a case where the rotation direction of the lawnmower robot is a clockwise direction and the rotation angle is the first angle, the lawnmower robot rotates along the clockwise direction. Upon rotation by the first angle, the lawnmower robot may be rotated such that the orientation thereof is the same as the first direction.

In step 206, the lawnmower robot is controlled to move in a straight line along the first direction.

It may be understood that the first direction is determined according to the first vector, and the direction of the first vector is always a direction away from the obstacle. Thus, controlling the lawnmower robot to move in a straight line along the first direction means that the lawnmower robot may always move along the direction away from the obstacle, such that the lawnmower robot is capable of receiving a positioning signal or determining the current positioning information thereof based on feature point matching. In this way, the lawnmower robot is extricated.

In this embodiment, upon determination of the first direction, the lawnmower robot determines the rotation direction and the rotation angle of the lawnmower robot based on the current orientation and the first direction. Upon rotation by a specific angle along the rotation direction, the orientation of the lawnmower robot coincides with the first direction, and the lawnmower robot may then move along the first direction away from the obstacle, such that the lawnmower robot is extricated.

When a plurality of obstacles are present, relative to a position of the lawnmower robot, positions of the obstacles are different, and various position relationships are present among different obstacles. Exemplarily, in some embodiments, there may be at least one set of parallel obstacles among the plurality of obstacles, or there may be at least one set of obstacles whose first vectors have opposite directions; and in some other embodiments, the plurality of obstacles may not be parallel to each other, and the position relationships of the respective obstacles are different, and a manner in which the lawnmower robot determines the first direction is also different.

The present application further provides a method for extrication of a lawnmower robot. This method aims to illustrate how the lawnmower robot determines the first direction in a case where there is at least one set of parallel obstacles among the plurality of obstacles, or there is at least one set of obstacles whose first vectors have opposite directions among the plurality of obstacles.

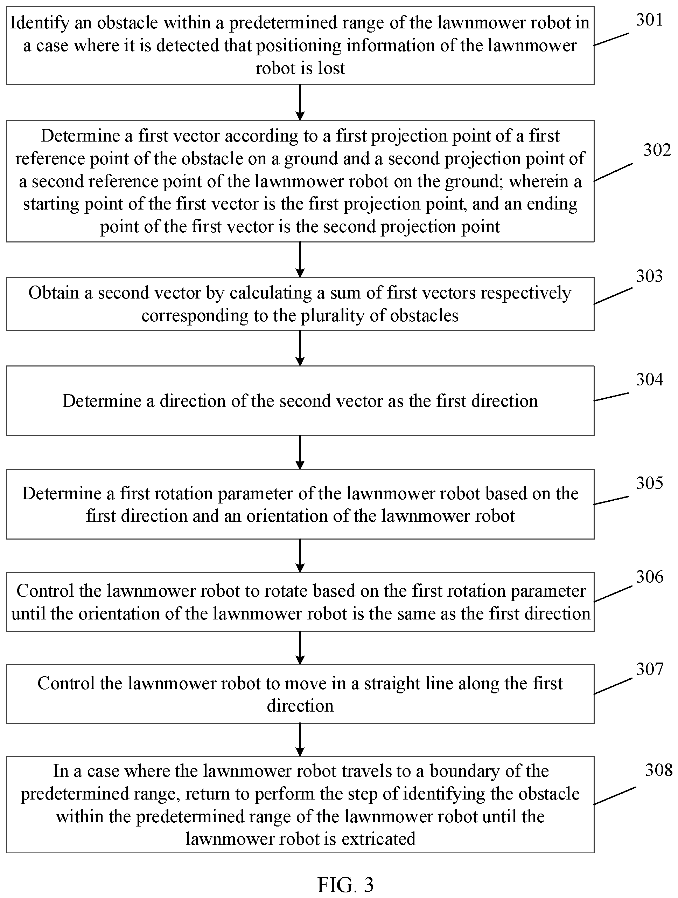

FIG. 3 is a schematic diagram of a method for extrication of a lawnmower robot according to an embodiment of the present application. As illustrated in FIG. 3, the method includes the following step 301 to step 308.

In step 301, an obstacle is identified within a predetermined range of the lawnmower robot in a case where it is detected that positioning information of the lawnmower robot is lost.

In some embodiments, the predetermined range may be a circular area with the lawnmower robot as a center and a predetermined distance as a radius. The lawnmower robot is equipped with a radar sensor. In a case where the positioning information of the lawnmower robot is lost, the radar sensor emits a radar signal to detect whether an obstacle exists within the predetermined range, and determines the number of obstacles present within the predetermined range.

In step 302, a first vector is determined according to a first projection point of a first reference point of the obstacle on a ground and a second projection point of a second reference point of the lawnmower robot on the ground; wherein a starting point of the first vector is the first projection point, an ending point of the first vector is the second projection point, and a length of the first vector is a distance between the first projection point and the second projection point.

The starting point of the first vector is the first projection point of the obstacle, and the ending point of the first vector is the second projection point of the lawnmower robot. That is, a direction of the first vector points from the obstacle to the lawnmower robot, and the direction of the first vector is a direction always away from the obstacle.

In step 303, a second vector is obtained by calculating a sum of first vectors respectively corresponding to a plurality of obstacles.

It may be understood that in a case where there are a plurality of obstacles around the lawnmower robot within the predetermined range, prior to determination of the second vector, the first projection point of each obstacle and the second projection point of the lawnmower robot may be determined according to step 102, and then the first vector corresponding to each obstacle is determined respectively based on the first projection point of each obstacle and the second projection point.

It should be noted that determination manners of the projection points (including the first projection point and the second projection point) of each obstacle may be the same or different, which is not limited in the present application.

In step 303, in a case where a plurality of obstacles are present, the lawnmower robot determines a sum of the first vectors corresponding to these obstacles to obtain the second vector.

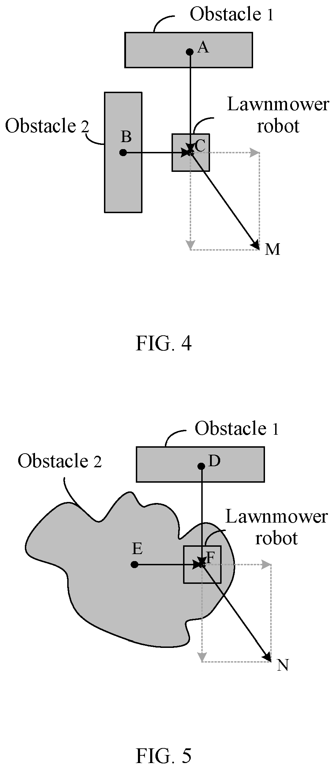

For example, FIG. 4 is a schematic diagram of a first obstacle 1, a second obstacle 2, and the lawnmower robot from a top view. As illustrated in FIG. 4, both the first obstacle 1 and the second obstacle 2 are walls. The first projection point of the first obstacle 1 is point A, the first projection point of the second obstacle 2 is point B, and the second projection point of the lawnmower robot is point C. A first vector corresponding to the first obstacle 1 is *̅A̅C̅*̅, and a first vector corresponding to the second obstacle 2 is *̅B̅C̅*̅. According to a parallelogram law of vector calculation, a sum of the vectors corresponding to the first obstacle 1 and the second obstacle 2 is *C̅M̅,* and then a direction of the second vector points from point C to point M.

FIG. 5 is a schematic diagram of another first obstacle 1, another second obstacle 2, and the lawnmower robot from a top view. As illustrated in FIG. 5, the first obstacle 1 is a wall, and the second obstacle 2 is a tree. A first projection point of the first obstacle 1 is point D, a first projection point of the second obstacle 2 is point E, and the second projection point of the lawnmower robot is point F. A first vector corresponding to the first obstacle 1 is *̅D̅F̅*̅, and a first vector corresponding to the second obstacle 2 is *̅E̅F̅*̅. According to the parallelogram law of vector calculation, a sum of the vectors corresponding to the first obstacle 1 and the second obstacle 2 is *̅F̅N̅*̅, and then a direction of the second vector points from point F to point N.

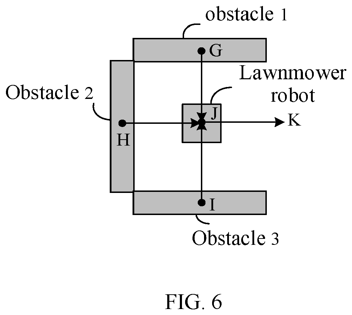

FIG. 4 and FIG. 5 describe a determination method of the second vector in a case where the number of obstacles is 2. The determination method of the second vector in a case where the number of obstacles is greater than 2 is described below by taking FIG. 6 as an example.

As illustrated in FIG. 6, the number of obstacles is 3. Assuming that all the three obstacles are walls, as illustrated in FIG. 6, a first obstacle 1 and a third obstacle 3 are parallel, and a distance of the first obstacle 1 relative to the lawnmower robot is the same as a distance of the third obstacle 3 relative to the lawnmower robot; the first obstacle 1 is perpendicular to the second obstacle 2, and the third obstacle 3 is perpendicular to the second obstacle 2. A first projection point of the first obstacle 1 is G, a first projection point of the second obstacle 2 is H, and a first projection point of the third obstacle 3 is I. The second projection point of the lawnmower robot is J. A first vector corresponding to the first obstacle 1 is *̅G̅J̅*̅, a first vector corresponding to the second obstacle 2 is *̅H̅J̅*̅, and a first vector corresponding to the third obstacle 3 is *̅I̅J̅*̅. The vector *̅G̅J̅*̅ and the vector *̅I̅J̅*̅ have opposite directions and equal lengths, that is, a distance of point G relative to point J is the same as a distance of point I relative to point J. A sum of the vectors of the first obstacle 1, the second obstacle 2, and the third obstacle 3, that is, the second vector, is H̅J̅, and then a direction of the second vector points from point J to point K.

In step 304, a direction of the second vector is determined as a first direction.

The orientation of the lawnmower robot may be an orientation of a main camera installed on the lawnmower robot configured to detect a surrounding environment, which may also be referred to as a travel orientation of the lawnmower robot. The travel orientation of the lawnmower robot is a direction in which the lawnmower robot travels.

Exemplarily, in FIG. 4, the first direction points from point C to point M; in FIG. 5, the first direction points from point F to point N; and in FIG. 6, the first direction points from point J to point K.

In step 305, a first rotation parameter of the lawnmower robot is determined based on the first direction and an orientation of the lawnmower robot.

The first rotation parameter includes a rotation direction and a rotation angle. The rotation direction includes clockwise rotation and counterclockwise rotation.

In step 306, the lawnmower robot is controlled, based on the first rotation parameter, to rotate until the orientation of the lawnmower robot is the same as the first direction.

In some embodiments, the lawnmower robot rotates based on the determined rotation direction and rotation angle, such that the orientation of the lawnmower robot is the same as the first direction.

In step 307, the lawnmower robot is controlled to move in a straight line along the first direction.

In step 308, in a case where the lawnmower robot travels to a boundary of the predetermined range, the process returns to perform the step of identifying the obstacle within the predetermined range of the lawnmower robot, until the lawnmower robot is extricated.

In some embodiments, in a case where the process returns to perform the step of identifying the obstacle within the predetermined range of the lawnmower robot, the steps of determining the first vector according to the first projection point of the first reference point of the obstacle on the ground and the second projection point of the second reference point of the lawnmower robot on the ground, and controlling the lawnmower robot to move based on the posture of the lawnmower robot and the first vector may also be performed subsequently, that is, the process returns to perform step 301.

It may be understood that whether in FIG. 4, FIG. 5, or FIG. 6, when the lawnmower robot moves along the first direction, the lawnmower robot may not touch the obstacle. In some embodiments, with a position where the current location is located as a center and a predetermined distance as a radius, the lawnmower robot determines a predetermined range in real time during a moving process, identifies the obstacle within the predetermined range in real time, then determines the first direction in real time, and advances along the currently determined first direction, until a positioning signal is acquired or current positioning information may be determined based on feature point matching. In some other embodiments, upon determining the first direction based on the obstacle within the predetermined range, the lawnmower robot moves in a straight line along the first direction until moving to a boundary of a current predetermined range. Then, at the boundary of the current predetermined range, with the current position as a center and the predetermined distance as a radius, the lawnmower robot determines a predetermined range again, continues to scan the obstacle within the predetermined range based on the radar sensor, determines the first direction again, and then moves along the first direction until the positioning information is found.

An embodiment of the present application further provides a method for extrication of a lawnmower robot. This method is intended to illustrate how the lawnmower robot determines the first direction in a case where a plurality of obstacles are not parallel to each other.

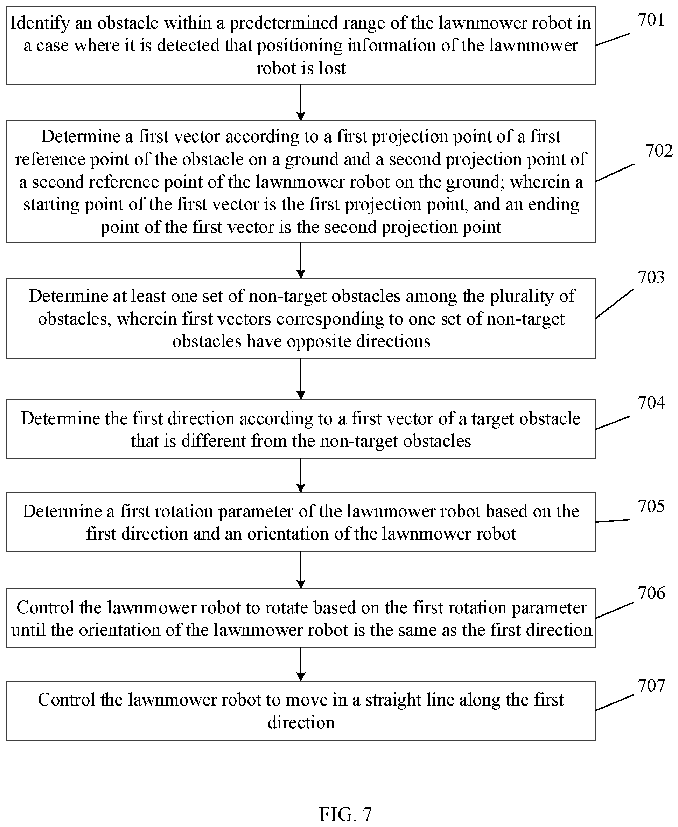

FIG. 7 is a schematic diagram of a method for extrication of a lawnmower robot according to an embodiment of the present application. The method may include the following steps.

In step 701, an obstacle within a predetermined range of the lawnmower robot is identified in a case where it is detected that positioning information of the lawnmower robot is lost.

In some embodiments, the predetermined range may be a circular area with the lawnmower robot as a center and a predetermined distance as a radius. The lawnmower robot is equipped with a radar sensor. In a case where the positioning information of the lawnmower robot is lost, the radar sensor emits a radar signal to detect whether an obstacle is present within the predetermined range.

In step 702, a first vector is determined according to a first projection point of a first reference point of the obstacle on a ground and a second projection point of a second reference point of the lawnmower robot on the ground; wherein a starting point of the first vector is the first projection point, an ending point of the first vector is the second projection point, and a length of the first vector is a distance between the first projection point and the second projection point.

The starting point of the first vector is the first projection point of the obstacle, and the ending point of the first vector is the second projection point of the lawnmower robot. That is, a direction of the first vector points from the obstacle to the lawnmower robot, and the direction of the first vector is a direction always away from the obstacle.

In step 703, at least one set of non-target obstacles is determined among a plurality of obstacles, wherein first vectors corresponding to one set of non-target obstacles have opposite directions.

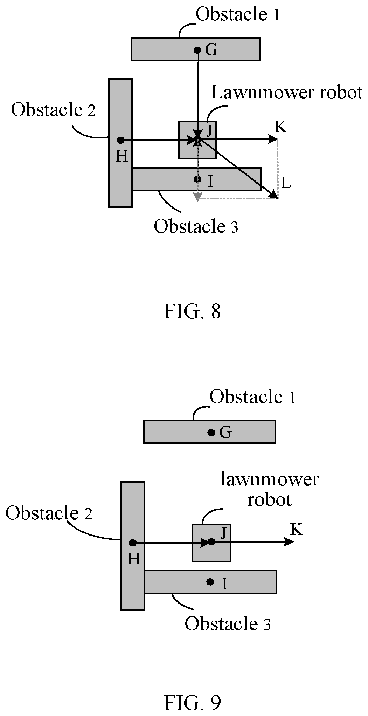

FIG. 8 provides a schematic diagram of obstacles and the lawnmower robot from a top view. As illustrated in FIG. 8, the first obstacle 1 and the third obstacle 3 are parallel, and the first vector of the first obstacle 1 and the first vector of the third obstacle 3 have opposite directions. Distances between the first obstacle 1 and the lawnmower robot and between the third obstacle 3 and the lawnmower robot are different. In some embodiments, both a distance of the first obstacle 1 relative to the lawnmower robot and a distance of the third obstacle 3 relative to the lawnmower robot are less than a predetermined distance threshold.

As illustrated in FIG. 8, in a case where the first direction is determined based on a sum of the first vectors of the obstacles as described in Embodiment 3, the lawnmower robot moving in a straight line along a J-L direction may touch an obstacle and still fail to be extricated. Therefore, in this embodiment, at least one set of non-target obstacles whose first vectors have opposite directions, such as the first obstacle 1 and the third obstacle 3, is determined first, and then the first direction is determined according to a first vector of a target obstacle that is different from the non-target obstacles.

In step 704, the first direction is determined according to a first vector of a target obstacle that is different from the non-target obstacles.

As illustrated in FIG. 9, among three obstacles, the first obstacle 1 and the third obstacle 3 are the non-target obstacles, and then the second obstacle 2 is the target obstacle and a direction of the first vector corresponding to the target obstacle is the first direction.

FIG. 9 merely illustrates an example of this embodiment. In some other embodiments, in a case where the number of target obstacles is greater than 1, the first direction is determined according to a sum of the first vectors of the target obstacles. Specifically, a direction corresponding to a vector that is the sum of the first vectors of the target obstacles is determined as the first direction.

In step 705, a first rotation parameter of the lawnmower robot is determined based on the first direction and an orientation of the lawnmower robot.

The first rotation parameter includes a rotation direction and a rotation angle. The rotation direction includes clockwise rotation and counterclockwise rotation.

In step 706, the lawnmower robot is controlled, based on the first rotation parameter, to rotate until the orientation of the lawnmower robot is the same as the first direction.

In some embodiments, the lawnmower robot rotates based on the determined rotation direction and rotation angle, such that the orientation of the lawnmower robot is the same as the first direction.

In step 707, the lawnmower robot is controlled to move in a straight line along the first direction.

As seen from FIG. 9, during movement of the lawnmower robot along the first direction determined based on the first vector of the target obstacle, the first direction points from point J to point K. That is, the lawnmower, during moving along the first direction, may never touch the obstacle, and the movement is along a direction away from the obstacle. This helps the lawnmower robot to be extricated and find a positioning signal.

It may be understood that, in the embodiments of the present application, related data such as user information is involved. In a case where the embodiments of the present application are applied to specific products or technologies, user permission or consent needs to be obtained, and the acquisition, use, and processing of the related data need to comply with relevant laws, regulations, and standards of relevant countries and regions.

It should be noted that although the respective steps of the method in the present application are described in a specific order in the accompanying drawings, this does not require or imply that these steps must be performed in this specific order, or that all the shown steps must be performed to achieve a desired result. Additionally or alternatively, some steps may be omitted, a plurality of steps may be combined into one step for execution, and/or one step may be decomposed into a plurality of steps for execution; or steps in different embodiments may be combined into a new technical solution.

Based on the above embodiments, this embodiment of the present application provides a decoding apparatus. Various units included in the apparatus and various modules included in the units may all be implemented by a processor, or may be implemented by a specific logic circuit. During the specific implementation process, the processor may be a central processing unit (CPU), a micro processing unit (MPU), a digital signal processor (DSP) or a field programmable gate array (FPGA) or the like.

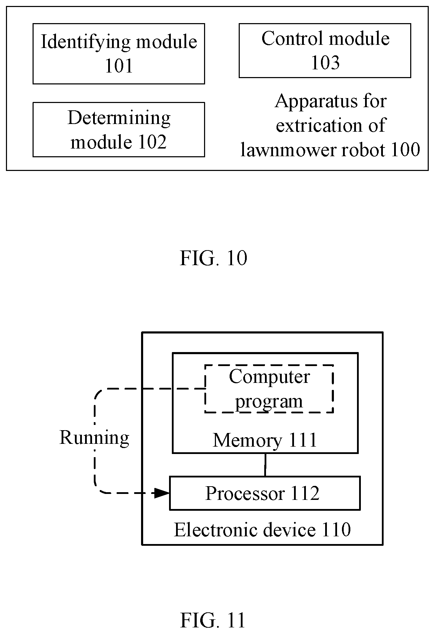

FIG. 10 is a structural schematic diagram of an apparatus for extrication of a lawnmower robot according to an embodiment of the present application. As illustrated in FIG. 10, the apparatus 100 includes an identifying module 101, a determining module 102, and a control module 103.

The identifying module 101 is configured to identify an obstacle within a predetermined range of the lawnmower robot in a case where it is detected that positioning information of the lawnmower robot is lost.

The determining module 102 is configured to determine a first vector according to a first projection point of a first reference point of the obstacle on a ground and a second projection point of a second reference point of the lawnmower robot on the ground; wherein a starting point of the first vector is the first projection point, an ending point of the first vector is the second projection point, and a length of the first vector is a distance between the first projection point and the second projection point.

The control module 103 is configured to control, based on a posture of the lawnmower robot and the first vector, the lawnmower robot to move such that the lawnmower robot is extricated.

In some embodiments, the control module 103 is further configured to: determine a first direction based on the first vector of the obstacle; determine a first rotation parameter of the lawnmower robot based on the first direction and an orientation of the lawnmower robot; control the lawnmower robot to rotate based on the first rotation parameter until the orientation of the lawnmower robot is the same as the first direction; and control the lawnmower robot to move in a straight line along the first direction.

In some embodiments, the control module 103 is further configured to, in a case where a plurality of obstacles are present, obtain a second vector by calculating a sum of first vectors respectively corresponding to the plurality of obstacles; and determine a direction of the second vector as the first direction.

In some embodiments, the control module 103 is further configured to, in a case where a plurality of obstacles are present, determine at least one set of non-target obstacles among the plurality of obstacles, wherein first vectors corresponding to one set of non-target obstacles have opposite directions; and determine the first direction according to a first vector of a target obstacle that is different from the non-target obstacles.

In some embodiments, the identifying module 101 is further configured to, in a case where the lawnmower robot travels to a boundary of the predetermined range, return to perform the steps of: identifying the obstacle within the predetermined range of the lawnmower robot; determining the first vector according to the first projection point of the first reference point of the obstacle on the ground and the second projection point of the second reference point of the lawnmower robot on the ground; and controlling the lawnmower robot to move based on the posture of the lawnmower robot and the first vector, until the lawnmower robot is extricated.

In some embodiments, the first reference point of the obstacle is related to a type of the obstacle.

In some embodiments, in a case where the obstacle is of a first type, the first reference point on the obstacle is a center position of the obstacle; or in a case where the obstacle is of a second type, the second reference point on the obstacle is any point of a designated part of the obstacle.

The above apparatus embodiments is similar to the description of the above method embodiments, which achieves the same beneficial effects of the method embodiments. For technical details that are not disclosed in the apparatus embodiments, reference may be made to the method embodiments for understanding.

It should be noted that the organization of the functional modules of the apparatus in FIG. 10 according to the embodiments of the present application is exemplary and is merely a logical functional organization; and other organizations may be used in actual implementation. In addition, functional units in the embodiments of the present application may be integrated into one processing unit, or each of the units may exist along physically, or two or more units may be integrated into one unit. The integrated units above may be implemented in a form of hardware or in a form of a software functional unit, or may be implemented by a combination of software and hardware.

It should be noted that, in the embodiments of the present application, in a case where the above methods are implemented in a form of a software functional module and sold or used as an independent product, the functions may be stored in a computer readable storage medium. Based on such understanding, the technical solutions according to the embodiments of the present application or the contribution made to the related art may be embodied in a software product, and stored in a storage medium which includes several instructions to cause an electronic device to perform all or a part of the steps of the methods according to various embodiments of the present application. The storage medium includes a U disk, a mobile hard disk, a read-only memory (ROM), a magnetic disk, a compact disc read-only memory (CD-ROM), or the like medium which is capable of storing program code. In this way, the embodiments of the present application are not subject to limitation of any combination of hardware and software.

An embodiment of the present application further provides an electronic device. The electronic device may be a lawnmower robot. FIG. 11 is a schematic diagram of a hardware entity of an electronic device according to an embodiment of the present application. As shown in FIG. 11, the electronic device 110 includes a memory 111 and a processor 112. The memory 111 stores a computer program runnable on the processor 112, wherein the processor 112, when loading and running the program, is caused to perform the steps in the methods according to the above embodiments.

It should be noted that the memory 111 is configured to store instructions and applications executable by the processor 112, and may also buffer data to be processed or already processed by the processor 112 and respective modules in the electronic device 110 (for example, image data, audio data, voice communication data, and video communication data). The memory may be implemented by a flash memory (FLASH) or a random-access memory (RAM).

An embodiment of the present application further provides a computer-readable storage medium storing one or more computer programs thereon. The one or more computer programs, when loaded and run on a processor, cause the processor to perform the steps in the methods according to the above embodiments.

An embodiment of the present application further provides a computer program product including one or more instructions. The one or more instructions, when loaded and executed on a computer, cause the computer to perform the steps in the methods according to the above embodiments.

It should be noted that the descriptions of the above storage medium and device embodiments are similar to the description of the above method embodiment and have similar beneficial effects as the method embodiment. For technical details not disclosed in the storage medium, storage medium, and device embodiments of the present application, please refer to the description of the method embodiment of the present application for understanding.

Understandably, the terms "one embodiment," "embodiment," or "one or more embodiments" mentioned in this specification means that a specific characteristic, structure, or feature described with reference to an embodiment is included in at least one embodiment of the present application. Therefore, the terms "in an embodiment", "in one embodiment", or "in some embodiments", when used in various positions, do not necessarily refer to an identical embodiment. In addition, the specific characteristic, structures or features may be combined in one or more embodiments in any appropriate manner. It should be understood that, in various embodiments of the present application, the magnitude of sequence numbers of the procedure described above does not mean the execution sequence, the execution sequence of the procedure should be determined by the function and the internal logic, and the implementing procedure of the embodiment of the present application should not be restricted. The sequence numbers in the foregoing embodiments of the present application are merely for illustrative purposes, and are not intended to indicate priorities of embodiments. The above description of the various embodiments tends to emphasize the differences between them. For the similarities or identical aspects, reference may be made to each other, and for the sake of brevity, they are not repeated herein.

It should be further noted that, in present disclosure, the terms "include", "contain", or any other variant thereof are intended to cover a non-exclusive inclusion, so that a procedure, method, product or device that includes a list of elements not only includes those elements but also includes other elements that are not expressly listed, or further includes elements inherent to such the procedure, method, product or device. An element preceded by a term "includes a" does not, without more constraints, preclude the presence of additional identical elements in the procedure, method, product or device that includes the elements.

Understandably, in the embodiments provided by the present application, the disclosed systems, apparatuses and methods may be implemented in other modes. For example, the device embodiments above are only illustrative, and the units of the device are divided from the perspective of logical functions only and may be divided in a different way in practical application. For example, multiple units or components may be combined or integrated into another system, or some features may be ignored or not executed. Besides, the coupling, direct coupling or communication connection illustrated or discussed herein may be implemented through some interfaces, and indirect coupling or communication connection between devices or units may be electronic, mechanical, or in other forms.

The modules described as stand-alone components above may be separated physically or not; and the components illustrated as modules may be physical units or not, namely, they may be located in one place, or distributed on multiple network elements. Some or all of the modules described above may be selected as required to fulfill the objectives of the embodiment solutions of the present application.

Besides, all functional modules in the embodiments of the present application may be physically stand-alone, or integrated into a processing unit, or two or more of the modules are integrated into one unit. The integrated module may be implemented in a form of hardware, or may be implemented in a form of software function unit.

A person of ordinary skill in the art may understand that all or some of the processes of the methods in the embodiments may be implemented by a program instructing relevant hardware. The program may be stored in a computer readable storage medium. When the program runs, the processes of the methods in the embodiments are performed. Herein, the storage medium may include various medium capable of storing program codes, such as a volatile memory, a read-only memory (ROM), a magnetic disk, or an optical disk.

Alternatively, when the integrated unit of the present application is implemented in the form of software function unit and sold or used as an independent product, the integrated unit may be stored in a computer readable storage medium. Based on such an understanding, the technical solutions in embodiments of the present application essentially, or the part contributing to the conventional technology may be implemented in a form of software product. The computer software product is stored in a storage medium, and includes several instructions for instructing an electronic device to perform all or some of the steps of the methods in embodiments of the present application. The foregoing storage medium includes any medium that can store program code, such as, a removable storage device, a ROM, a magnetic disk, or an optical disc.

The methods disclosed in the several method embodiments provided in the present application may be combined arbitrarily, unless otherwise conflicting, to obtain new method embodiments.

The features disclosed in the several product embodiments provided in the present application may be combined arbitrarily, unless otherwise conflicting, to obtain new product embodiments.

The features disclosed in the several method or device embodiments provided in the present application may be combined arbitrarily, unless otherwise conflicting, to obtain new method embodiments or device embodiments.

In summary, the above embodiments are used only for illustrating the present application, but are not intended to limit the protection scope of the present application. Various modifications and replacements readily derived by those skilled in the art within technical disclosure of the present application shall fall within the protection scope of the present application. Therefore, the protection scope of the present application is subject to the appended claims.

## Claims

1. A method for extrication of a lawnmower robot, **characterized in** comprising:
identifying an obstacle within a predetermined range of the lawnmower robot in a case where it is detected that positioning information of the lawnmower robot is lost;
determining a first vector according to a first projection point of a first reference point of the obstacle on a ground and a second projection point of a second reference point of the lawnmower robot on the ground; wherein a starting point of the first vector is the first projection point, and an ending point of the first vector is the second projection point; and
controlling, based on a posture of the lawnmower robot and the first vector, the lawnmower robot to move such that the lawnmower robot is extricated.

2. The method according to claim 1, **characterized in that** the controlling, based on the posture of the lawnmower robot and the first vector, the lawnmower robot to move such that the lawnmower robot is extricated comprises:
determining a first direction based on the first vector of the obstacle;
determining a first rotation parameter of the lawnmower robot based on the first direction and an orientation of the lawnmower robot;
controlling the lawnmower robot to rotate based on the first rotation parameter until the orientation of the lawnmower robot is the same as the first direction; and
controlling the lawnmower robot to move in a straight line along the first direction.

3. The method according to claim 2, **characterized in that** a plurality of obstacles are present, and the determining the first direction based on the first vector of the obstacle comprises:
obtaining a second vector by calculating a sum of first vectors respectively corresponding to the plurality of obstacles; and
determining a direction of the second vector as the first direction.

4. The method according to claim 2, **characterized in that** a plurality of obstacles are present, and the determining the first direction based on the first vector of the obstacle comprises:
determining at least one set of non-target obstacles among the plurality of obstacles, wherein first vectors corresponding to one set of non-target obstacles have opposite directions; and
determining the first direction according to a first vector of a target obstacle that is different from the non-target obstacles.

5. The method according to claim 2 or 4, **characterized in that** in a case where the lawnmower robot travels to a boundary of the predetermined range, the method returns to perform the steps of: identifying the obstacle within the predetermined range of the lawnmower robot; determining the first vector according to the first projection point of the first reference point of the obstacle on the ground and the second projection point of the second reference point of the lawnmower robot on the ground; and controlling the lawnmower robot to move based on the posture of the lawnmower robot and the first vector, until the lawnmower robot is extricated.

6. The method according to claim 5, **characterized in that** the first reference point of the obstacle is related to a type of the obstacle.

7. The method according to claim 6, **characterized in that** in a case where the obstacle is of a first type, the first reference point on the obstacle is a center position of the obstacle; or
in a case where the obstacle is of a second type, the first reference point on the obstacle is any point of a designated part of the obstacle.

8. An apparatus for extrication of a lawnmower robot, **characterized in** comprising:
an identifying module, configured to identify an obstacle within a predetermined range of the lawnmower robot in a case where it is detected that positioning information of the lawnmower robot is lost;
a determining module, configured to determine a first vector according to a first projection point of a first reference point of the obstacle on a ground and a second projection point of a second reference point of the lawnmower robot on the ground, wherein a starting point of the first vector is the first projection point, an ending point of the first vector is the second projection point, and a length of the first vector is a distance between the first projection point and the second projection point; and
a control module, configured to control, based on a posture of the lawnmower robot and the first vector, the lawnmower robot to move such that the lawnmower robot is extricated.

9. An electronic device, **characterized in** comprising: a memory and a processor, the memory storing a computer program runnable on the processor, wherein the processor, when loading and running the one or more computer programs, is caused to perform the method as defined in any one of claims 1 to 7.

10. A computer-readable storage medium, storing a computer program thereon, **characterized in that** the one or more computer programs, when loaded and run on a processor, cause the processor to perform the method as defined in any one of claims 1 to 7.
